# EUROPÄISCHE PATENTANMELDUNG

(11) **EP 2 062 781 A1**
(43) Veröffentlichungstag der Anmeldung: **27.05.2009**
(21) Anmeldenummer: 08018457.5
(22) Anmeldetag: 22.10.2008
(51) Int. Cl.: B60R 5/04

(54) **Abdecksystem für ein Fahrzeug**

(30) Priorität: 23.11.2007 DE 102007057073
(71) Anmelder: BOS GmbH & Co. KG, 73760 Ostfildern (DE)
(72) Erfinder: Schleef, Thomas, 32457 Porta Westfalica (DE)
(74) Vertreter: Patentanwälte Ruff, Wilhelm, Beier, Dauster & Partner

(57) **Zusammenfassung**

1. Abdecksystem für ein Fahrzeug.
2.1. Die Erfindung betrifft ein Abdecksystem für ein Fahrzeug (10), insbesondere Sichtschutzsystem für einen heckseitigen Fahrzeugladeraum (14), mit einem flexiblen Flächengebilde (40), welches durch Verschiebung einer Auszugkante (42) des Flächengebildes (40) in einer Auszugsrichtung (2b) aus einem kompakten Stauzustand in eine vergrößerte Funktionszustand überführbar ist.
2.2. Erfindungsgemäß greift an der Auszugkante (42) des Flächengebildes (40) mindestens ein motorbetriebener Seilzug (70) an, der mittels eines Elektromotors (84) in Richtung der Auszugsrichtung (2b) kraftbeaufschlagbar ist.
3. Fig. 1.

## Beschreibung

Die Erfindung betrifft ein Abdecksystem für ein Fahrzeug, insbesondere ein Sichtschutzsystem für einen heckseitigen Fahrzeugladeraum, mit einem flexiblen Flächengebilde, welches durch Verschieben einer Auszugkante des Flächengebildes in einer Auszugsrichtung aus einem kompakten Stauzustand in einen vergrößerten Funktionszustand überführbar ist.

Gattungsgemäße Abdecksysteme sind aus dem Stand der Technik bekannt. Das flexible Flächengebilde kann bei Nichtgebrauch im einem Platz sparenden Stauzustand gebracht werden. Ausgehend von diesem Stauzustand kann es durch eine Zugkraft an der Auszugkante vergrößert werden, beispielsweise durch Entfalten oder Abwickeln von der Rollowelle. Dadurch wird ein Funktionszustand erreicht, in dem das Flächengebilde als Sichtschutz, als Sonnenschutz oder als Sicherheitstrennvorrichtung genutzt werden kann.

Besonders als Sichtschutzes für heckseitige Fahrzeugladeräume finden erfindungsgemäße Abdecksysteme häufig Verwendung, um einen Einblick durch die Fahrzeugscheiben auf das im Fahrzeugladeraum befindliche Gepäck zu verhindern.

### Aufgabe und Lösung

Aufgabe der Erfindung ist es, ein gattungsgemäßes Abdecksystem zu verbessern, insbesondere in Hinblick auf ein einwandfreies Funktionieren und eine kostengünstige Herstellung.

Erfindungsgemäß wird dies dadurch erreicht, dass an der Auszugkante des Flächengebildes mindestens ein motorbetriebener Seilzug angreift, der mittels eines Elektromotors in Richtung der Auszugsrichtung kraftbeaufschlagbar ist. Vorzugsweise sind dabei quer zur Auszugsrichtung voneinander beabstandet zwei motorbetriebene Seilzüge am Flächengebilde angreifend vorgesehen, wobei die motorbetriebenen Seilzüge vorzugsweise in einem Randbereich des Flächengebildes angreifen.

Durch den mindestens einen mittels eine Elektromotors betriebenen Seilzug kann das Flächengebilde entgegen einer in Richtung des Stauzustandes wirkenden Kraft in einen vergrößerten Funktionszustand überführt werden. Der Seilzug gestattet dabei eine besonders flexible Anordnung des Elektromotors, da der Seilzug auf einfache Art und Weise mittels einfacher Umlenkrollen und/oder Führungskanäle bis zu einem entlegen angeordneten Elektromotor geführt werden kann. Durch die Verwendung zweier Seilzüge, die vorzugsweise beidseitig des Flächengebildes an diesem angreifen, kann eine verkantungsfreie und dadurch zuverlässige Bewegung des Flächengebildes gewährleistet werden.

Das Flächengebilde liegt im Stauzustand in einer Form vor, aus der es durch Ziehen an der Auszugkante in den vergrößerten Funktionszustand überführt werden kann. Bevorzugt ist es, dass das Flächengebilde im Stauzustand auf einer Rollowelle aufgewickelt vorliegt. Bei einer alternativen Gestaltung ist das Flächengebilde im Stauzustand leporelloartig gefaltet und entsprechend entfaltbar.

Die Gegenkraft wird vorzugsweise durch mindestens einen federbetriebenen Seilzug eingeleitet, der an der Auszugkante des Flächengebildes angreift. Dieser ist mittels eines Federmittels entgegen der Auszugsrichtung kraftbeaufschlagbar. Auch hier wird bevorzugt, wenn zwei derartige federbetriebene Seilzüge vorgesehen sind, die beidseitig des Flächengebildes an diesem angreifen. Bei dieser Ausgestaltung wird die Rückholkraft, die das Flächengebilde in seinen Stauzustand zu ziehen versucht, zumindest nicht ausschließlich durch eine Kraft verursacht, die unmittelbar am Flächengebilde angreift, wie es beispielsweise bei einer durch eine Wickelfeder verursachten Rückholkraft der Fall ist. Stattdessen existiert ein vollständiges System zur Bewegung der Auszugkante, welches unabhängig von der konkreten Gestaltung des Flächengebildes funktionstüchtig ist. Das Flächengebilde selbst wird als Kraft übertragendes Mittel nicht zwingend benötigt.

Die Gestaltung mit mindestens einem motorbetriebenen Seilzug und mindestens einem federbetriebenen Seilzug, wobei beide Seilzüge in entgegengesetzte Richtung wirken, erlaubt eine genaue Steuerung der Position der Auszugkante des Flächengebildes. Wenn mittels des Elektromotors auf den motorbetriebenen Seilzug eine Zugkraft ausgeübt wird, so wird dadurch die Auszugkante in die Richtung des motorbetriebenen Seilzugs verlagert und das Federmittel des federbetriebenen Seilzugs gespannt. Sobald der Elektromotor die Zugkraft am motorbetriebenen Seilzug ausreichend weit senkt, so zieht das Federmittel die Auszugkante in entgegengesetzte Richtung in Richtung des federbetriebenen Seilzugs. Der Elektromotor ist vorzugsweise derart ausgestaltet, dass er bei Wegfall der Bestromung ein Rastmoment aufweist, welches durch das Federmittel nicht überwunden werden kann. So ist es möglich, durch Abschalten des Elektromotors einen stabilen Zustand in Hinblick auf die Lage der Auszugkante zu erzielen.

Die motorbetriebenen und/oder die federbetriebenen Seilzüge können unmittelbar am flexiblen Flächengebilde, insbesondere an dessen Auszugkanten, festgelegt sein. Bevorzugt wird gegenüber einer solchen Gestaltung, bei der eine Entnahme des Flächengebildes aus dem Fahrzeug nicht ohne Weiteres möglich ist, dass der motorisch betriebene Seilzug und/oder der federbetriebene Seilzug an einem Aufnahmeschlitten angreifen, der mit der Auszugkante des flexiblen Flächengebildes lösbar verbindbar ist. Dieser Aufnahmeschlitten erlaubt es somit, dass das flexible Flächengebilde fallweise eingesetzt oder gelöst werden kann. Vorzugsweise ist in Fahrzeugquerrichtung voneinander beabstandet beidseitig des Flächengebildes jeweils ein Aufnahmeschlitten vorgesehen. Besonders bevorzugt ist es, wenn sowohl die motorisch betriebenen Seilzüge als auch die federbetriebenen Seilzüge am Aufnahmeschlitten angreifen.

Der motorbetriebene und/oder der federbetriebene Seilzug sind vorzugsweise als Bowdenzug ausgebildet und in einer stabilen Hülle geführt. Dies erleichtert die Verlegung und führt zu einer höheren Flexibilität bei der Anordnung des Federmotors und/oder der Elektromotors.

Bei einer bevorzugten Ausgestaltung ist beiden elektromotorbetriebenen Seilzügen ein gemeinsamer Motor zugeordnet. Dieser gemeinsame Motor ist sowohl in Hinblick auf die Kosten als auch in Hinblick auf die synchrone Bewegung beider elektromotorbetriebenen Seilzüge von Vorteil. Durch die Möglichkeit, die Seilzüge mittels Umlenkrollen oder innerhalb einer stabilen Hülle flexibel umzulenken, kann dieser Motor im Fahrzeug flexibel angeordnet werden.

Besonders bevorzugt ist es allerdings, dass der Elektromotor bei einem Abdecksystem, welches als Laderaumabdecksystem ausgebildet ist, unterhalb eines Ladebodens angeordnet ist. Unterhalb des Ladebodens, auf dem bestimmungsgemäß das Gepäck verstaut wird, besteht üblicherweise ausreichend Platz, um den Motor anordnen zu können.

Bei einer Weiterbildung der Erfindung ist der Elektromotor mit zwei auf einer gemeinsamen Welle vorgesehenen Seilzugtrommeln oder einer gemeinsamen Seilzugtrommel zum Aufwickeln beider elektromotorbetriebener Seilzüge drehgekoppelt. Ein kompliziertes Verteilergetriebe, welches verschiedene Seilzugtrommeln jeweils mit dem einen Motor koppelt, kann dadurch vermieden werden. Besonders einfach ist eine Ausgestaltung, bei der nur eine Seilzugtrommel vorgesehen ist, wobei die beiden elektromotorbetriebenen Seilzüge vorzugsweise auf diese Seilzugtrommel axial voneinander beabstandet befestigt sind.

Bei Abdecksystemen, die als Rollosystem ausgebildet sind, ist es besonders von Vorteil, wenn die Rollowelle durch eine Wickelfeder entgegen der Auszugsrichtung federmomentbeaufschlagt wird. Die hierdurch in das Flächengebilde eingeleitete Federkraft kann verwendet werden, um bei Freigabe der elektromotorbetriebenen Seilzüge ein Rückziehen des Flächengebildes in den Stauzustand zu bewirken. Bei einer solchen Ausgestaltung kann auf darüber hinausgehende federbetriebene Seilzüge oben beschriebenen Typs verzichtet werden. Bevorzugt ist es jedoch, dass sowohl mindestens ein federbetriebener Seilzug an der Auszugkante des Flächengebildes angreift als auch eine der Rollowelle zugeordnete Wickelfeder vorgesehen ist. Die durch den federbetriebenen Seilzug auf die Auszugkante des Flächengebildes wirkende Kraft dient dabei vorrangig der Überführung des Abdecksystems in seinen Stauzustand, während die Wickelfeder der Rollowelle vorrangig die Aufgabe hat, das flexible Flächengebilde unter Spannung zu halten, so dass dieses nicht durchhängt.

Vorzugsweise sind beidseitig des flexiblen Flächengebildes sich erstreckende Schienen vorgesehen, in denen die Auszugkante geführt wird. Dabei kann die Auszugkante in diesen Schienen unmittelbar geführt sein, beispielsweise durch beidseitig über das Flächengebilde hinausragende Fortsätze, die in U-profilartige Schienen eingreifen. Bevorzugt ist es allerdings, dass in den Schienen die oben beschrieben Aufnahmeschlitten beweglich gelagert sind und dass diese ihrerseits die Auszugkante des flexiblen Flächengebildes aufnehmen, so dass die Auszugkante nur mittelbar in den Schienen geführt ist. Auf diese Art und Weise kann eine Entnehmbarkeit des Abdecksystems einfach gewährleistet werden. Die Auszugkante ist dabei lösbar in die fest im Fahrzeug vorgesehenen Aufnahmeschlitten eingesetzt. Da die Aufnahmeschlitten durch die beidseitig angreifenden Seilzüge bereits in ihrer Bewegungsfreiheit begrenzt sind, ist als einfachste Form der Schienen eine Ausgestaltung der Schienen als plane, lang gestreckte Auflage- oder Gleitfläche möglich.

Die Schienen sind im einfachsten Fall in Auszugsrichtung erstreckt, also fluchtend zur Erstreckungsrichtung des flexiblen Flächengebildes ausgerichtet. Sie können jedoch auch entlang von Fahrzeugsäulen, beispielsweise das Fahrzeug heckseitig abschließenden C- oder D-Säulen vorgesehen sein und sich somit abweichend von der Auszugsrichtung erstrecken.

### Kurzbeschreibung der Zeichnungen

Weitere Aspekte und Vorteile der Erfindung ergeben sich außer aus den Ansprüchen auch aus der nachfolgenden Beschreibung einer bevorzugten Ausführungsform der Erfindung. Diese ist anhand der Figuren erläutert. Dabei zeigen:
- Figur 1: ein erfindungsgemäßes Abdecksystem im Heckbereich ei- nes nur teilweise dargestellten Fahrzeugs,
- Figur 2: eine Führungsschiene des in Figur 1 dargestellten Abdeck- systems mitsamt einem darauf aufgesetzten Führungsschlit- ten und
- Figur 3: eine Elektromotoreinheit zum Betrieb des Abdecksystems der Figuren 1 und 2.

### Detaillierte Beschreibung der Ausführungsbeispiele

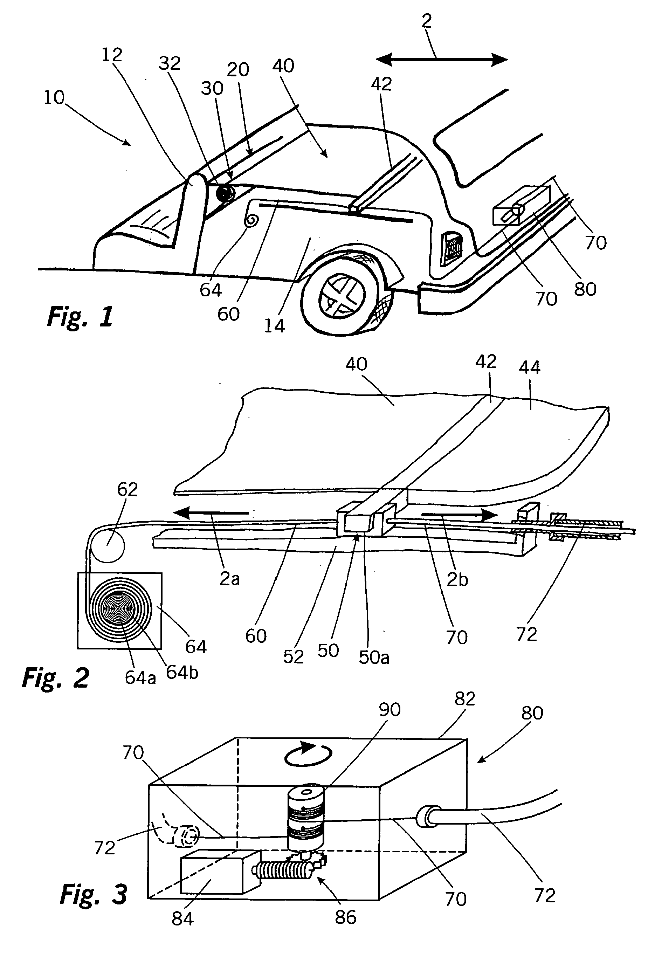

Figur 1 zeigt ein nur teilweise dargestelltes Fahrzeug 10 mit einem erfindungsgemäßen Abdecksystem.

Dieses Abdecksystem ist als Rollosystem ausgebildet und hinter den Fondsitzen 12 des Fahrzeugs 10 vorgesehen. Es dient der Abdeckung eines heckseitigen Laderaums 14 des Fahrzeugs 10, um zu verhindern, dass durch die Fahrzeugscheiben von außen zu erkennen ist, ob sich Gepäck im Laderaum befindet.

Das Rollosystem weist als wesentliche Komponenten ein Kassettengehäuse 20 mit einer darin eingesetzten Rollowelle 30 auf, auf der ein flexibles Flächengebilde 40 zum Teil aufgewickelt ist.

Zur Bewegung des flexiblen Flächengebildes ist am hinteren Ende ein Auszugsprofil 42 am Flächengebilde 40 vorgesehen, das mittels zweier Seilzüge 60, 70 in Fahrzeuglängsrichtung 2 verschiebbar ist.

Zu den Komponenten im Detail: das Kassettengehäuse 20 ist in nicht näher dargestellter Art und Weise lösbar ausgebildet und kann gemeinsam mit der darin vorgesehenen Rollowelle 30 aus dem Fahrzeug entfernt werden. Die Rollowelle 30 ist zur Aufnahme des Flächengebildes 40 ausgebildet. Sie ist im Kassettengehäuse 20 drehbar gelagert. Zusätzlich ist eine Wickelfeder 32 innerhalb der Rollowelle 30 angeordnet, welche zum einen an der Rollowelle 30 und zum anderen am Kassettengehäuse 20 festgelegt ist. Diese Wickelfeder 32 wird beim Ausziehen des Flächengebildes 40 in Fahrzeuglängsrichtung 2 nach hinten zunehmend tordiert, sodass sie auf das Flächengebilde 40 mit zunehmender Auszugslänge ein stetig größer werdendes Rückholmoment ausübt. Zur Verlagerung des Flächengebildes 40, also um das Flächengebilde 40 auf der Rollowelle aufzuwickeln oder von ihr abzuwickeln, sind die Seilzüge 60 und 70 vorgesehen. In der Fig. 1 sind zur Vereinfachung nur die linksseitig im Fahrzeug vorgesehenen Seilzüge 60, 70 dargestellt. Das gesamte Abdecksystem ist jedoch bis auf geringfügige Abweichungen symmetrisch aufgebaut, so dass die sich auf die linksseitige Ausgestaltung beziehende Beschreibung ebenso für die rechte Seite gilt.

Wie aus Figur 2 ersichtlich ist, greifen die Seilzüge 60, 70 nicht unmittelbar am Auszugsprofil 42 an, sondern sind an einem Schlitten 50 vorgesehen. Dieser Schlitten 50 ist zur Bewegung auf einer Schiene 52 in Richtung der Fahrzeuglängsrichtung 2 ausgebildet. Der in der Darstellung der Figur 2 vereinfacht dargestellte Schlitten weist eine Ausnehmung 50a auf, in die das Auszugsprofil 42 von oben eingelegt ist. Durch entsprechende Zugkräfte an den Seilzügen 60, 70 kann der Schlitten 50 und mit ihm das Auszugsprofil 42 in eine gewünschte Lage auf der Schiene 52 verfahren werden. Der Seilzug 60 verläuft vom Schlitten 50 in Fahrzeuglängsrichtung 2 nach vorne und wird dort über eine Umlenkrolle 62 zu einem weiter unten angeordneten und in der Darstellung der Figuren 1 und 2 nur schematisch dargestellten Federmotor 64 geführt. Dieser Federmotor übt durch eine Torsionsfeder 64a und eine Seiltrommel 64b, auf der der Seilzug 60 aufgewickelt werden kann, eine permanent in Richtung 2a wirkende Kraft auf den Seilzug 60 aus.

Der auf der gegenüberliegenden Seite des Schlittens 50 vorgesehene Seilzug 70 verläuft ausgehend vom Schlitten 50 in Fahrzeuglängsrichtung 2 nach hinten und am hinteren Ende der Schiene 52 in eine Kunststoffumhüllung 72 hinein. Wie aus der Figur 1 zu ersehen ist, verläuft der Seilzug 70 innerhalb der Umhüllung 72 weiter bis zu einer zentral angeordneten Motoreinheit 80 unter dem Ladeboden des Laderaums 14. Dies gilt ebenso auch für den Seilzug 70, der vom rechtsseitigen Schlitten ausgeht.

Die gemeinsame Motoreinheit 80 ist in Figur 3 näher dargestellt. Die Motoreinheit 80 weist ein Gehäuse 82 auf, in dem ein Elektromotor 84 vorgesehen ist, der über ein Schneckengetriebe 86 mit einer Zwillingsseilzugtrommel 88 verbunden ist. An dieser Zwillingsseilzugtrommel 88 sind die von der linksseitigen und rechtsseitigen Fahrzeughälfte kommenden Seilzüge 70 an axial voneinander beabstandeten Befestigungspunkten 90 verbunden. Bei einer Inbetriebnahme des Motors 84 können somit die Seilzüge 70 synchronisiert betätigt werden.

Die Funktionsweise des dargestellten Rollosystems sieht vor, dass mittels der beidseitigen Federmotoren 64 sowie mittels des Elektromotors 80 die Schlitten 50 synchron miteinander auf der Schiene 52 nach vorne und hinten verfahren werden können.

Dies wird genutzt, um das Flächengebilde 40 aus dem im Fahrzeug festgelegten Kassettengehäuse 20 herauszuziehen. Anders als bei herkömmlichen Rollosystemen, bei denen die Wickelfeder, die der Rollowelle zugeordnet ist, die Funktion übernimmt, das Flächengebilde nach Wegfall der Gegenkraft wieder einzuziehen, hat die Wickelfeder 32 bei der Ausführungsform der Figur 1 lediglich den primären Zweck, das Flächengebilde 40 gespannt zu halten. Um das Auszugsprofil 42 in Fahrzeuglängsrichtung 2 nach vorne zu bewegen, werden vielmehr die Federmotoren 64 verwendet.

Diese Trennung der beiden Funktion "Spannen des Flächengebildes" und "Aufwickeln des Flächengebildes" erlaubt eine entsprechend angepasste Auslegung der jeweiligen Federmittel 32, 64.

## Patentansprüche

1. Abdecksystem für ein Fahrzeug (10), insbesondere Sichtschutzsystem für einen heckseitigen Fahrzeugladeraum (14), mit einem flexiblen Flächengebilde (40), welches durch Verschiebung einer Auszugkante (42) des Flächengebildes (40) in einer Auszugsrichtung (2b) aus einem kompakten Stauzustand in eine vergrößerte Funktionszustand überführbar ist,
**dadurch gekennzeichnet, dass**
an der Auszugkante (42) des Flächengebildes (40) mindestens ein motorbetriebener Seilzug (70) angreift, der mittels eines Elektromotors (84) in Richtung der Auszugsrichtung (2b) kraftbeaufschlagbar ist.

2. Abdecksystem nach Anspruch 1,
**dadurch gekennzeichnet, dass**
quer zur Auszugsrichtung (2b) voneinander beabstandet zwei motorbetriebene Seilzüge (70) am Flächengebilde (40) angreifen, wobei die motorbetriebene Seilzüge (70) vorzugsweise in einem Randbereich des Flächengebildes (40) angreifen.

3. Abdecksystem nach Anspruch 1 oder 2,
**dadurch gekennzeichnet, dass**
an der Auszugkante (42) mindestens ein federbetriebener Seilzug (60) am Flächengebilde angreift, der mittels eines Federmittels (64) entgegen der Auszugsrichtung (2b) kraftbeaufschlagbar ist.

4. Abdecksystem nach einem der vorstehenden Ansprüchen,
**dadurch gekennzeichnet, dass**
der motorisch betriebene Seilzug (70) und/oder der federbetriebener Seilzug (60) an einem Aufnahmeschlitten (50) angreifen, der mit der Auszugkante (42) des flexiblen Flächengebildes lösbar verbindbar ist.

5. Abdecksystem nach einem der Ansprüche 2 bis 4,
**dadurch gekennzeichnet, dass**
den beiden elektromotorbetriebenen Seilzügen (70) ein gemeinsamer Elektromotor (84) zugeordnet ist.

6. Abdecksystem nach Anspruch 5,
**dadurch gekennzeichnet, dass**
das Abdecksystem als Laderaumabdecksystem ausgebildet ist und der Seilzugmotor (84) unterhalb eines Ladebodens ist.

7. Abdecksystem nach einem der Ansprüche 5 und 6,
**dadurch gekennzeichnet, dass**
der Elektromotor (84) mit zwei auf einer gemeinsamen Welle vorgesehenen Seilzugtrommeln oder einer gemeinsamen Seilzugtrommel (90) zum Aufwickeln beider motorbetriebener Seilzüge (70) drehgekoppelt ist.

8. Abdecksystem nach einem der vorstehenden Ansprüche,
**dadurch gekennzeichnet, dass**
das Abdecksystem als Rollosystem ausgebildet ist und das flexible Flächengebilde (40) im Stauzustand auf einer drehbar gelagerten Rollowelle (30) aufgewickelt ist.

9. Abdecksystem nach einem der vorstehenden Ansprüche,
**dadurch gekennzeichnet, dass**
die Rollowelle (30) durch eine Wickelfeder (32) entgegen der Auszugsrichtung (2b) federmomentbeaufschlagt wird.

10. Abdecksystem nach einem der vorstehenden Ansprüche,
**dadurch gekennzeichnet, dass**
beidseitig des flexiblen Flächengebildes (40) Schienen (52) vorgesehen sind, mittels derer die Auszugkante (42) geführt wird.

11. Abdecksystem nach einem der Ansprüche 4 bis 10,
**dadurch gekennzeichnet, dass**
der Aufnahmeschlitten (50) in oder auf einer Schienen (52) beweglich gelagert ist.
